# EUROPÄISCHE PATENTSCHRIFT

(11) **EP 0 392 043 B1**
(45) Veröffentlichungstag und Bekanntmachung des Hinweises auf die Patenterteilung: **10.08.1994**
(21) Anmeldenummer: 89106458.6
(22) Anmeldetag: 12.04.1989
(51) Int. Cl.: B22D 11/126, B23K 7/00

(54) **Stranggiessanlage mit Einrichtung zum Sauerstoffbrennschneiden**
Continuous casting machine with an oxygen flame cutting apparatus
Machine de coulée avec dispositif de coupage au chalumeau à oxygène

(43) Veröffentlichungstag der Anmeldung: 17.10.1990
(73) Patentinhaber: FA. HORST K. LOTZ, D-65719 Hofheim (DE)
(72) Erfinder: Lotz, Horst K., D-6240 Königstein-Johanniswald (DE); Lotz, Tobias, D-6200 Wiesbaden-Delkenheim (DE); Lotz, Mattias, D-6200 Wiesbaden-Delkenheim (DE); Thoma, Günther K., D-6200 Wiesbaden-Delkenheim (DE)

(56) Entgegenhaltungen:
- DE-A- 2 327 523
- DE-A- 2 631 995
- DE-A- 3 005 004
- DE-A- 3 103 402
- DE-A- 3 532 010
- DE-A- 3 541 134
- DE-U- 8 501 244
- FR-A- 2 462 219
- US-A- 2 511 591
- US-A- 3 230 117
- US-A- 4 261 552

## Beschreibung

Eine Einrichtung zum schnellen, sicheren und wirtschaftlichen Sauerstoffbrennschneiden in einer Stranggießanlage umfaßt alle mechanischen, gasetechnischen, elektrischen und elektronischen Bauteile, die direkt oder indirekt zur Strang-Trennstrecke in einer Stahl-Stranggießanlage gehören, so zum Beispiel zum Strangtransport und zum Brennschneiden selbst.

Es ist hier die Aufgabe gestellt worden, geeignete Bauteile und Funktionsabläufe der gesamten Trennstrecke zur Erzielung der Hauptwirkung, nämlich des Schneidens im Mitlauf mit dem Strang oder im Stillstand, und der beabsichtigen Nebenwirkungen, nämlich die schnellste, sicherste, kosten- und ergebnisqünstigste Abfolge der Hauptwirkung, so vorteilhaft wie möglich zu entwickeln. Im Gegensatz dazu, wurden bisher mehr oder weniger einfache Brennschneidmaschinen mit entsprechenden funktionsbedingten Bauteilen und Ergänzungen versehen.

Durch die neue gesamtheitliche Betrachtungsweise wurde eine Ausführungsform für die Einrichtung einschließlich Brennschneidmaschine gefunden, die den Anspruch erhebt, neu und vorteilhaft zu sein, selbst wenn die nachfolgend beschriebene Einrichtung nicht vollständig, sondern nur teilweise eingesetzt wird.

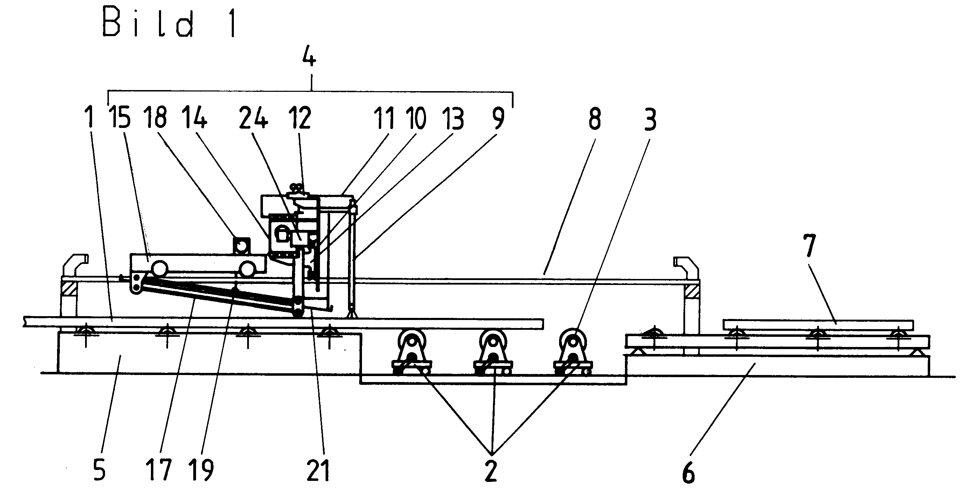

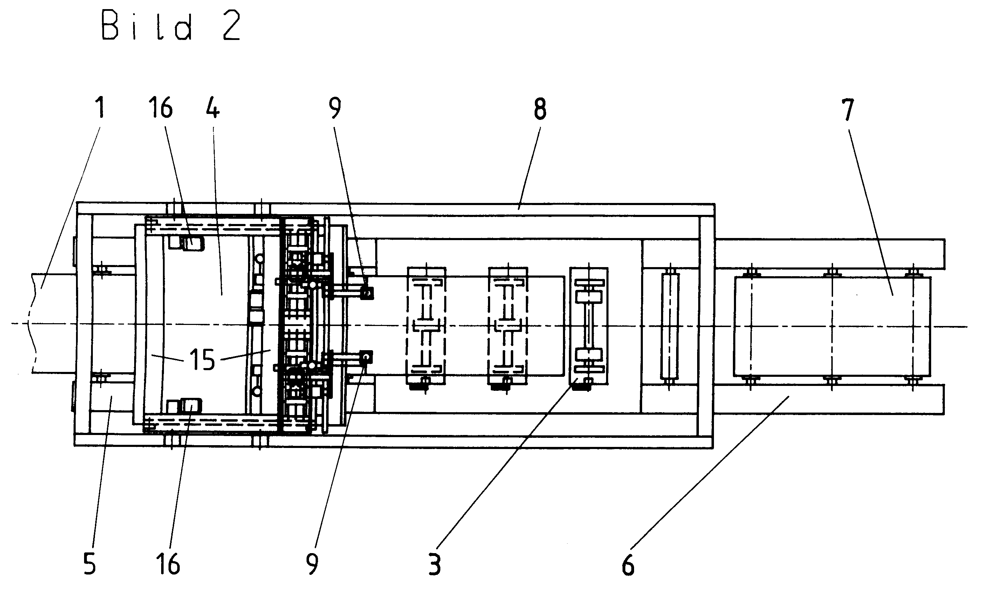

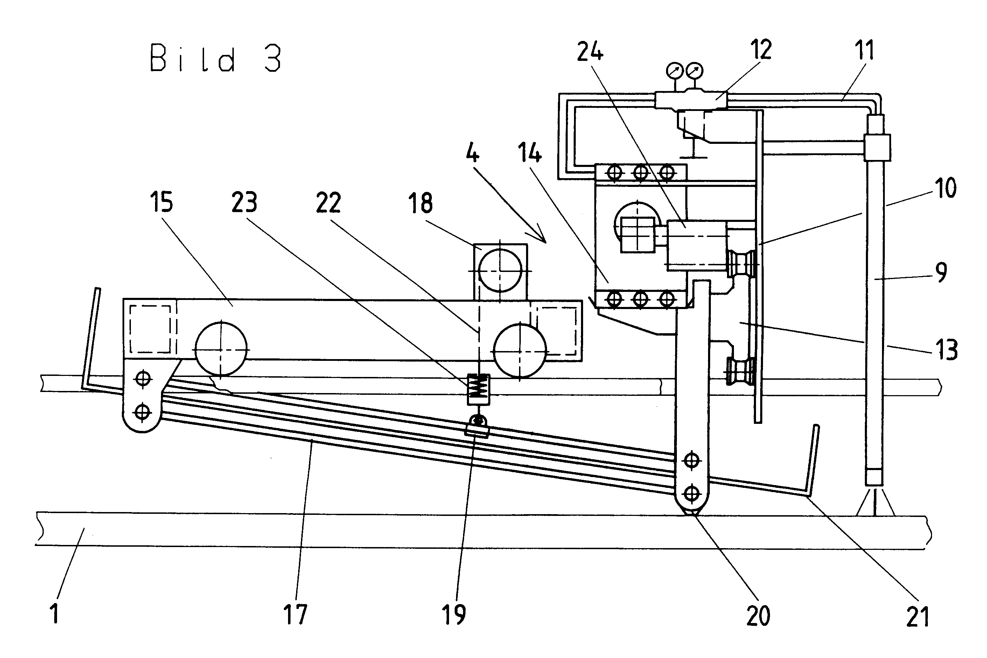

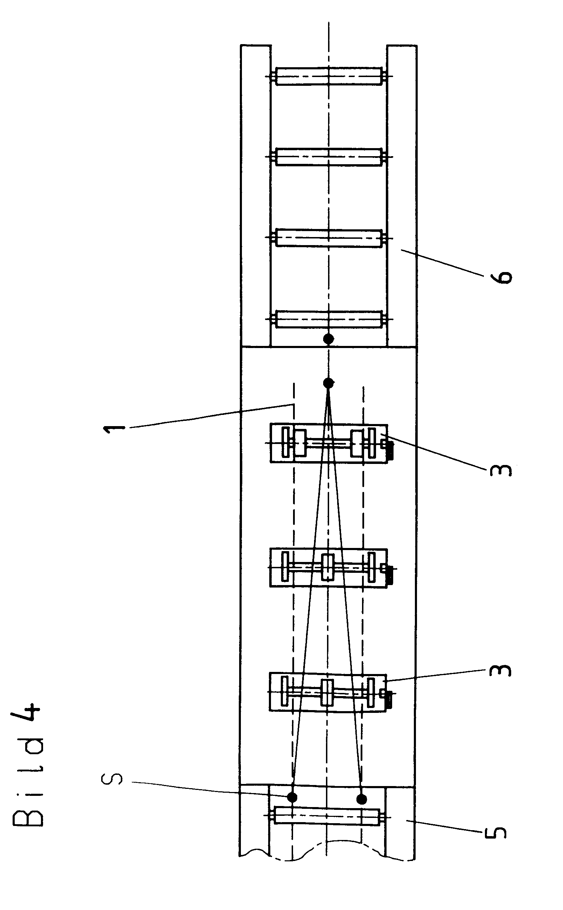

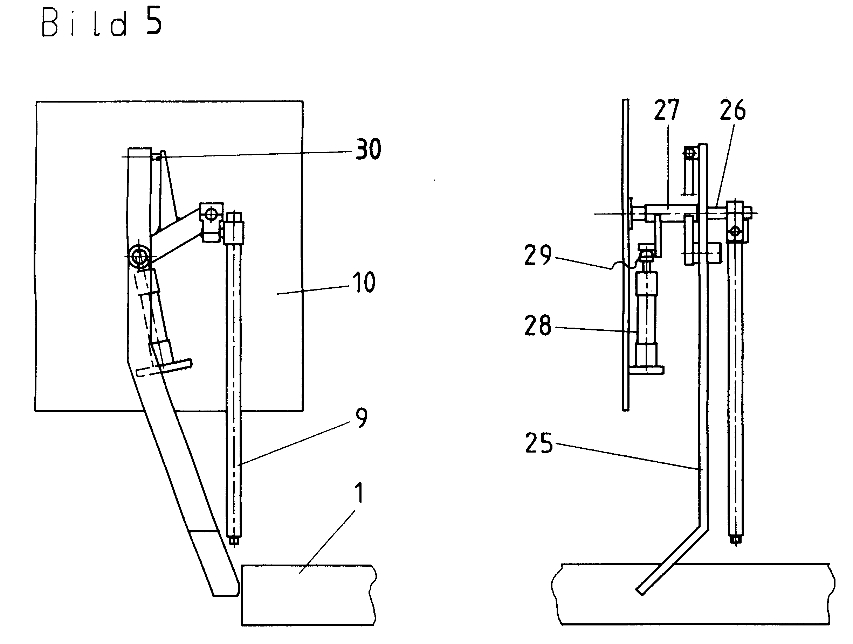

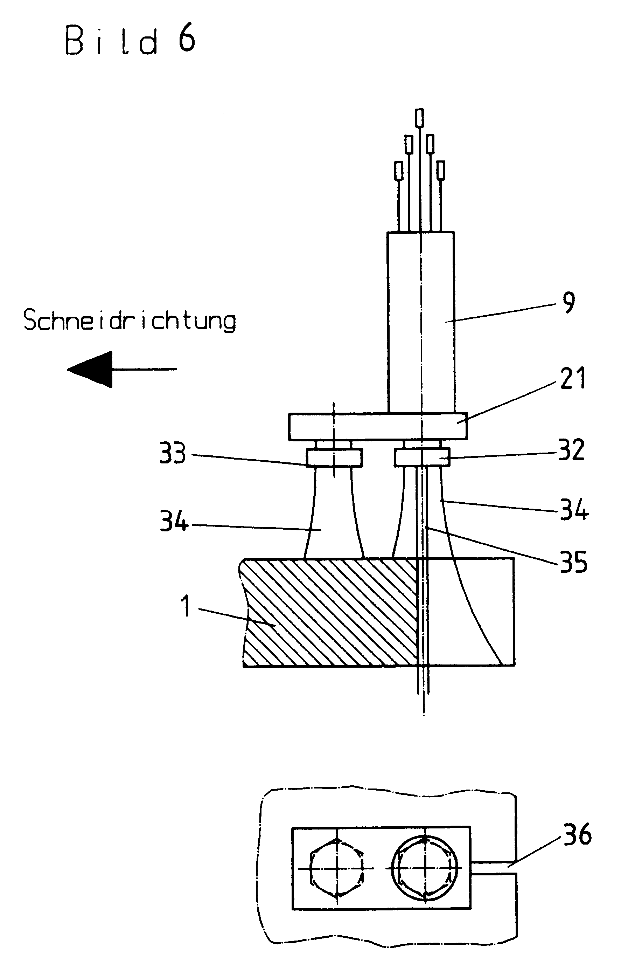

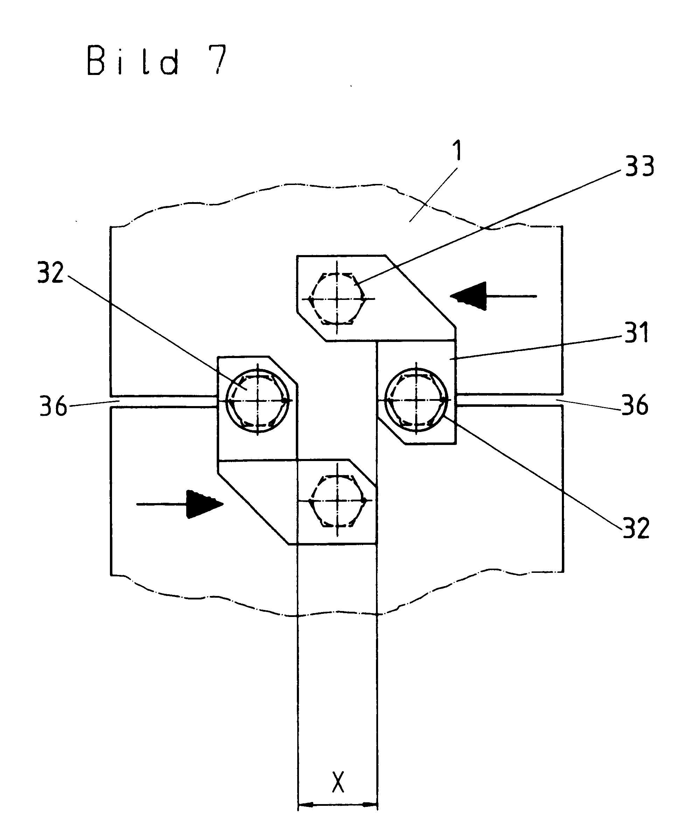

In der Offenlegungsschrift DE 3103 402 A1, von der der Oberbegriff des Anspruchs 1 ausgeht, wird eine Brennschneidmaschine beansprucht, die über einem nicht näher beschriebenen Rollgang (7 in Zeile 23, Seite 8) angeordnet ist und folgende damit vorbekannte Eigenheiten aufweist:
- ein Mitnehmerelement, bestehend aus Brennerwagenlaufbahn (13) und Abschirmwand, wird mit den Laufrollen an den Führungen des Maschinenrahmens (15) durch den auf der Traverse sitzenden Antrieb auf den Strang (1) zur Erzeugung eines synchronen Mitlaufs durch Reibung abgesenkt.
- Zum Verfahren der Brennschneidmaschine sind Fahrwerke mit Laufrollen am Maschinenrahmen (15) vorgesehen, die auf den Schienen laufen (Zeile 20-24, Seite 8). Der nicht näher beschriebene Antrieb für dieses Verfahren besteht üblicherweise aus einem Elektromotor mit Bremse und Getriebe, die mit einer oder zwei Elektromagnetkupplungen und entsprechenden Wellen mit einem oder zwei der Laufrollen verbunden sind. Im Synchronlauf sind die Elektromagnetkupplungen geöffnet, um ein Mitrollen der Laufrollen gegen die gebremsten oder selbst gehemmten anderen Teile des Antriebes zu ermöglichen.
- Am Maschinenrahmen (15) ist seitlich eine alle Gassteuergeräte enthaltende Gassteuereinheit angebracht von der Rohrleitungen (11) und Hängekabel, richtiger: Schläuche, zur individuelle Versorgung jedes einzelnen Brenners (9) führen. (Erwähnt auf Seite 9, Zeile 10-14 der D 3103402 A1).
- Zum Erfassen der Kante des Stranges (1) ist ein Kantenabtaster (25) (Seite 9, Zeile 15-20) erwähnt, der gemäß Fig. 2 offensichtlich drehbar an einem Brennerwagen (10) hängt und mit einer Rolle oder Schleifkufe am Strang entlang gleitet, nachdem durch Drehen bei Berührung des Stranges ein Grenzschalter den Schneidbeginn auslöst.
- Als Arbeitsgerät der Brennschneidmaschine sind die auf den Brennerwagen (10) befestigten Brenner (9) (Seite 9, Zeile 5 - 10) vorgesehen. Es wird ein Düsenkopf des Brenners (Seite 10, 1-2) erwähnt, der üblicherweise aus einer in den Brenner (9) gelöteten, zylindrischen Düsenaufnahme für die austauschbare Schneiddüse besteht.

Vorstehende, damit bekannte Eigenheiten entsprechen den bei der gesamtheitlichen Betrachtungsweise durch neuartige Lösungen möglichen Verbesserungsbereichen. Natürlich gab es dabei auch vom Fachmann erwartete Verbesserungen, die hier nicht erwähnt sind.

Wie in Bild 1 und zugehöriger Draufsicht Bild 2 dargestellt, besteht die erfindungsgemäße Einrichtung aus einem den Strang (1) tragenden Schneidrollgang (2) mit drei Schneidrollen (3), der zusammen mit der Brennschneidmaschine (4) die Trennstrecke der Stranggießanlage bildet. Ein Zulaufrollgang (5) für den Strang (1) vor der Trennstrecke und ein Ablaufrollgang (6) für die abgetrennte Bramme (7) ergänzen das Bild 1 bzw. 2 zum besseren Verständnis. Dabei ist der Ablaufrollgang (6) mit einer Rollgangswaage zum Wiegen der abgeschnittenen Brammen (7) ausgestattet dargestellt.
Ebenfalls zu sehen sind die Maschinenlaufbahn (8) der Brennschneidmaschine (4) mit zugehörigen` Stützen.
Die Brennschneidmaschine (4) zeigt in Bild 1 noch die wesentlichen Bauteile Schneidbrenner (9), Brennerwagen (10), Rohrleitungen (11), Gassteuergeräte (12), Schlauchführung (14), Brennerwagenlaufbahn (13), Maschinenrahmen (15), Verfahrantriebe (16), Hebel (17), Hubelement (18), Querstrebe (19), Aufsetzkufe (20) und Wärmeschutzplatte (21).
Genauer sind vorgenannte Einzelheiten an der Brennschneidmaschine in Bild 3 zu erkennen. Hier sind noch folgende Bauteile zusätzlich dargestellt:
Zugstück (22), Zwischenglied (23) sowie Schneidantrieb (24).

In Bild 4 ist dargestellt, wie die Schneidrollen (3) im Beispiel als Scheibenrollen ausgeführt angeordnet sind, damit die mit dem Schneiden im Synchronlauf am Startpunkt "S" der Kante des Stranges (1) beginnenden Schneidbrenner (9) nur zwischen den Scheibenrollen hindurch über den schützbaren Achsen derselben hinweg laufen.

In Bild 5 ist ein neuartiger Kantentaster zu sehen, der aus den auf dem Brennerwagen (10) sitzenden Teilen Kantentaster (25), Tragachse (26), Tasterträger (27), Hubzylinder (28), Elektrokontakt (29), Anschlag (30) besteht.

In Bild 6 sieht man die Anordnung eines Schneidbrenners (9), dessen Düsenaufnahme (31), eine Schneiddüse (32) und eine Heizdüse (33) mit ihren Schneidstrahlen (35) und Heizstrahlen (34) über der Schneidfuge (36).

Das Bild 7 lehnt sich an das Bild 5 an und zeigt die versetzte Anordnung von Schneiddüsen (32) und Heizdüsen (33) in den Düsenaufnahmen (31) zweier gegeneinander arbeitender Schneidbrenner (9).

Gemäß den Ansprüchen 1 und 2 und den Darstellungen Bild 1, 2 und 4 erlaubt der neuartige Schneidrollgang (2) ein besseres Arbeiten der über ihm angeordneten Brennschneidmaschine (4), indem die aus Stützrolle, Gehäuse und Verfahrantrieb bestehenden und als Walzen-, Einscheiben und Zweischeibenrolle ausgebildete Schneidrollen (3) gemäß den berechen- bzw. wählbaren Schneidbrennerwegen angeordnet. Dabei stellt man die Stützrollen gemäß der abgetrennten Stücklänge der Bramme (7) auf einen größten Abstand zueinander ein und so, daß die beiden aufeinander zuarbeitenden Schneidbrenner (9) nicht über eine Walze oder eine Scheibe der jeweiligen Stützrolle hinwegschneiden. Wenn erforderlich bewegt sich der Schneidbrenner (9) nur über die Achse einer Schneidrolle (3) hinweg. Diese kann durch Besprühen mit Wasser zusätzlich gegen Brennstrahl und Schlackeanhaftung geschützt werden. Auch ein bekanntes Unterbrechen von Schneidflamme und der transversalen Schneidbewegung ist möglich. Auf alle Fälle wird der vorgeplante Schneidweg sicherer, die Rollen werden besser geschützt und die Schneidzeit, die mögliche Stücklänge der Bramme (7) und der erforderliche Mitlaufweg werden kürzer.

Gemäß den Ansprüchen 1, 2 und 3 und den Darstellungen Bild 1, 2 und 3 wird der synchrone Mitlauf nicht durch eine an Führungen senkrecht abgesenkte und auf den Strang aufgesetzte Brennerwagenlaufbahn (13) erzeugt. Statt dessen wird trotz des Nachteils eines Winkels zur Schnittsenkrechten die Brennerwagenlaufbahn (13) an Hebeln (17) abgesenkt, die am hinteren Ende des Maschinenrahmens (15) gelagert sind. Durch ein Hubelement (18) mit Zugstück (22) und elastischem Zwischenglied (23) wird die Brennerwagenlaufbahn (13) mit ihrem durch das elastische Zwischenglied (23) beeinflußbaren Gewicht auf die Bramme gesetzt, natürlich mit einer Aufsetzkufe (20) an den Hebeln (17). Diese können auch als Parallelogramm ausgeführt werden, wodurch die Schneidbrenner (9) immer senkrecht zum Strang bleiben.

Die Wärmeschutzplatte (21) ist nicht wie vor dem fest unter dem Maschinenrahmen (15) installiert, ergänzt durch zwei seitliche Wärmeschutzplatten (21) senkrecht vor den seitlichen Rahmenteilen des Maschinenrahmens (15) und mindestens eine weitere unter der absenkbaren Brennerwagenlaufbahn (13). Das ergab zuviel Wärmedurchgang vom Strang (1) auf die Brennschneidmaschine (13) mit zusätzlicher Kühlanforderung.

Nun ist die Wärmeschutzplatte (21) aber erfindungsgemäß an den neuartigen Hebeln (17) zum Mitbewegen und die Brennerwagenlaufbahn (13) umfassend angebracht. Dadurch sind nur noch seitliche Wärmeschutzplatten (21) erforderlich und der Wärmedurchgang vom Strang her ist stark verringert.

Gemäß den Ansprüchen 1 und 6 und entsprechend der Darstellung Bild 5 ist am jeweiligen Brennerwagen (10) in der Nähe des Schneidbrenners (9) eine neuartige Kantentastung (25) angebracht, die nicht nur einfach wegschwenkt und einen Schaltkontakt betätigt, wenn sie die Strangkante anfährt. Um eine einstellbare Genauigkeit des Antastens und Findens der Kante des Stranges (1) für einen guten Schneidstart und ein sicheres Weg- und später wieder Einschwenken zu ermöglichen, ist folgende Ausführung gefunden:
auf einer auf dem Brennerwagen (10) befestigten Tragachse (26) ist nicht nur der Schneidbrenner (9) fest sondern auch der Tasterträger (27) drehbar befestigt. Der Kantentaster (25) selbst ist auf dem Tasterträger (27) auch drehbar gelagert und liegt gegen den verstellbaren Anschlag (30) am Tasterträger (27). Dieser ruht mit einem Hebel auf dem als Elektrokontakt (29) ausgebildeten Kopf des Kolbens des Hubzylinders (28).

Berührt der Kantentaster (25), auf geeigneten Abstand zum Schneidbrenner (9) eingestellt, die Kante des Stranges (1), dann dreht er bei weiterlaufendem Brennerwagen (10) den Tasterträger (27) und dessen Hebel hebt sich vom Elektrokontakt (29). Dieser mit einem O-Spannungsrelais verbundene unter Strom stehende Kontakt wird geöffnet und das Relais wird wirksam, startet die Schneidabfolge und eine Preßluftsteuerunge betätigt den Hubzylinder (28), der den Tasterträger (27) mit dem Kantentaster (25) für die Zeit des Schneidvorganges drehend über die Strangoberfläche hebt. Nach Rückkehr des Brennerwagens in die Ausgangsstellung wird durch Endstellungsschalter der Hubzylinder wieder entlastet und der Kantentaster (25) fällt wieder in seine Ausgangsstellung zurück.

Gemäß den Ansprüchen 1 und 7 und entsprechend der Darstellung Bild 2 besitzt die Brennschneidmaschine auf jeder Seite des Maschinenrahmens (15) einen Verfahrantrieb (16), der aus Elektromotor mit Bremse und Getriebe mit **wenig Selbsthemmung** vorzugsweise durch Stirnräder oder ähnlich besteht und auf ein Laufrad wirkt. Vorteilhaft ist der Elektromotor ein frequenzgesteuerter Synchronmotor, so daß beide Motoren im Gleichlauf die Brennschneidmaschine (4) gesteuert vor- und zurückfahren können. Beim Gleichlauf mit dem Strang (1) durch Aufsetzen der Brennerwagenlaufbahn (13) müssen die Antriebe nicht durch Lösen einer Kupplung von den Laufrädern für deren Freilauf abgetrennt werden, sondern es genügt ein Öffnen der Bremsen.
Dazu muß lediglich die Reibung zwischen Strang (1) und Aufsetzkufe (20) größer sein als die Selbsthemmung in den Antrieben und die Rollreibung der Laufräder auf der Maschinenlaufbahn (8).

Gemäß den Ansprüchen 1 und 8 und entsprechend den Darstellungen 1 und 3 werden die Gassteuergeräte (12) statt auf eine Gassteuertafel am Maschinenrahmen (15) nun direkt auf die Brennerwagen (10) direkt montiert, versorgt durch Schläuche in Schlauchführungen (14), die alle Bewegungen von Brennerwagen- und Brennerwagenlaufbahn waagerecht und senkrecht aufgenommen. Die Verbindung zu den Brennern (9) an den Brennerwagen (10) kann vorteilhaft mit festen z. B. Edelstahlrohleitungen erfolgen. Nachfließverluste durch den Brenner (9) sind durch die naheliegenden Gassteuergeräte gering geworden, wie auch die Brand- und Explosionsgefahr. Wenngleich auch die Einstellgenauigkeit und -geschwindigkeit so nahe am Brenner (9) günstig beurteilt werden kann, so ist die Zugänglichkeit auf der Brennschneidmaschine (4) besonders beim Nachstellen im Betrieb stark eingeschränkt. Dies kann jedoch durch Aufteilung in Absperr- und Mengeneinstellgeräte auf der Brennschneidmaschine (4) und Druckeinstellgeräte außen an oder vor der Brennschneidmaschine (4) vorteilhaft verbessert werden.

Gemäß den Ansprüchen 1 und 10 und entsprechend den Darstellungen 6 und 7 wird die Brennschneidmaschine (4) mit Schneidbrennern (9) ausgerüstet, deren Düsenaufnahme (31) nicht nur wie üblich die Schneiddüse (32) sondern auch eine gleichartige Heizdüse (33) aufnimmt und versorgt, wobei die Schneiddüse (32) hinter der Heizdüse (33) herläuft und außer Heizstrahlen (34) der Heizflamme auch einen Schneidstrahl (35) aus möglichst reinem Sauerstoff zum chemo-physikalischen Trennen von Eisen bzw. Stahl ausbläst. Durch die vorweg arbeitende Heizdüse wird das Material zur Verbesserung des chemischen Verbrennungsvorganges vorgeheizt, d.h. der Schnitt wird sicherer uns schneller.
Bei gegeneinander an einer Schneidfuge schneidenden Schneidbrennern (9) zur Schneidzeitverringerung beim Trennen breiter Werkstücke können die beiden Schneidbrenner (9) durch die Vorheizdüsen nicht so eng zusammenkommen wie früher, bevor ein Schneidbrenner (9) den Schnitt allein beendet.

In Bild 7 sieht man die erfindungsgemäße, wechselseitige, seitliche Anordnung der Heizdüse, die dann natürlich unter einem Winkel auf die spätere Schneidfugenstelle strahlt.

## Patentansprüche

1. Stranggießanlage für Stahl mit am Auslauf aus der Stranggießmaschine angeordneter Trennstrecke zum Unterteilen des mit Gießgeschwindigkeit austretenden Stranges, ausgestattet mit einem den Strang stützenden Schneidrollgang über dem eine auf parallelen Schienen durch An- oder Aufklemmung synchron zum Strang oder sonst motorisch verfahrbare Sauerstoff-Trenneinrichtung oder Brennschneidmaschine angeordnet ist, die mit den Gassteuergeräten für die Schneidbrenner, mit Kantentastern an den Brennerwagen und mit Wärmeschutzplatten gegen Wärme vom Strang her ausgerüstet ist, dadurch gekennzeichnet, daß
- der Schneidrollgang (2) aus verschieb- oder verfahrbaren Einzelrollen (3) besteht, die mit Ein- und Mehrscheibenrollen ausgebildet, dem jeweils typischen Brennerverlauf beim Schneiden im Synchronlauf entsprechend angeordnet sind;
- die Brennschneidmaschine (4) Hebel (17) zum Heben und Senken der Brennerwagenlaufbahn (13) hat und durch Aufsetzen den Synchronlauf mit dem Strang (1) erzeugen kann;
- die Brennschneidmaschine (4) einen Verfahrantrieb (16) ohne Kupplung für das vom Strang (1) unabhängige Verfahren hat, der dem beim durch Aufsetzen der Brennerwagenlaufbahn (13) erzeugten synchronen Mitlauf keinen wesentlichen Widerstand entgegensetzt;
- die Brennschneidmaschine (4) auf dem Brennerwagen (10) die Gassteuergeräte (12) für die Schneidbrenner (9) trägt, die mit diesen durch feste Rohrleitungen (11) verbunden sind, wobei für die Zuführung der bisweilen vorgeregelten Betriebsmittel zu den Gassteuergeräten (12) flexible Schläuche in Schlauchführungen vorgesehen sind;
- die Brennschneidmaschine (4) am Brennerwagen (10) zum Schneidbrenner (9) hin einstellbare, hochschwenkbare Kantentaster (25) trägt, die auf Elektrokontakten (29) ruhen, und
- die Brennschneidmaschine (4) eng zusammenfahrbare, zusätzliche Heizdüsen (33) an den Schneidbrennern (9) für besseres Anschneiden und schnelleres Schneiden trägt.

2. Stranggießanlage für Stahl nach Anspruch 1, dadurch gekennzeichnet, daß der Schneidrollgang (2) mit einzelnen Schneidrollen (3) ausgerüstet ist, die als verschiebbare oder verfahrbare Walzen, Mehrfach- oder Einscheibenrollen mit Lager und Verfahrantrieb ausgeführt sind.

3. Stranggießanlage für Stahl nach einem der Ansprüche 1 und 2, dadurch gekennzeichnet, daß die Hebel (17) zum Heben und Senken der Brennerwagenlaufbahn (13) über die ganze Maschinenlänge von Drehlagern hinten bis zur Brennerwagenlaufbahn (13) mit einer Aufsetzkufe (20) reichen und als einfache, auch querverbundene Hebel (17) oder als Parallelogramm ausgeführt sind.

4. Stranggießanlage für Stahl nach einem der Ansprüche 1 - 3, dadurch gekennzeichnet, daß zwischen dem aus motorischen, pneumatischen oder hydraulischen Antriebselementen mit Zugseil oder -kette bestehenden Hubelement (18) und den abzusenkenden bzw. anzuhebenden Hebeln (17) mit Wärmeschutzplatte (21) ein einstellbares, federndes Zwischenglied (23) für ein gewichtsanteiliges Aufsetzen der Brennerwagenlaufbahn (13) eingebaut ist.

5. Stranggießanlage für Stahl nach einem der Ansprüche 1 - 4, dadurch gekennzeichnet, daß eine vorwiegend die ganze Unterseite der Brennschneidmaschine (4) gegen Strahlungswärme von unten abschirmende Wärmeschutzplatte (21) an den Heben (17) der heb- und absenkbaren Brennerwagenlaufbahn (13) angebracht ist und sich mit dieser auf und ab bewegen kann.

6. Stranggießanlage für Stahl nach einem der Ansprüche 1 - 5, dadurch gekennzeichnet, daß ein drehbar gelagerter Tasterträger (27) mit Kantentaster (25) auf waagerechter Tragachse (26) am Brennerwagen (10) sitzend durch einen Hubzylinder (28) mit Elektrokontakt (29) gehalten wird, wobei ein einstellbarer Anschlag (30) die genaue Stellung zwischen Kante des Stranges (1) und Schneidbrenner (9) zum Zeitpunkt der Berührung durch den Kantentaster (25) sichert.

7. Stranggießanlage für Stahl nach einem der Ansprüche 1 - 6, dadurch gekennzeichnet, daß der Maschinen-Verfahrantrieb (16) aus Dreh- bzw. Gleichstrommotor mit Bremse und davor geschaltetem, besonders wenig selbsthemmendem Getriebe besteht, wobei zwei dieser mit Stirnradgetriebe ausgestatteten Getriebe-Motor-Bremse-Antriebssätze auf verschiedene Seiten der Brennschneidmaschine (4) verteilt eingesetzt werden.

8. Stranggießanlage für Stahl nach mindestens einem der Ansprüche 1 - 7, dadurch gekennzeichnet, daß die Gassteuergeräte (12) zur Verteilung, Abschaltung, Druck- bzw. Mengensteuerung mit Anzeigeelementen auf den mit der Brennerwagenlaufbahn (13) auf- und absenkbaren Brennerwagen (10) nahe an den Schneidbrennern (9) sitzen, und durch bewegliche Hauptleitungen versorgt werden und über kurze, feste, metallische Rohrleitungen (11) die Schneidbrenner (9) mit Betriebs- und Kühlmittel beschicken.

9. Stranggießanlage für Stahl nach einem der Ansprüche 1 - 8, dadurch gekennzeichnet, daß der Schneidbrenner (9) mit einer Düsenaufnahme (31) für die normale Schneiddüse (32) und einer zusätzlichen Heizdüse (33) ausgestattet ist und daß die Heizdüse (33) dabei neben und in Schneidrichtung gesehen vor der Schneiddüse (32) sitzt und dabei im durch den Düsenabstand bestimmten Winkel auf die Schneidlinie zeigt.

## Claims

1. Strand-casting installation with cutting zone arranged at the exit of the strand-casting machine to subdivide the strand exiting with casting speed.
The strand-casting installation is equipped with a cutting roller table supporting the strand. An oxygen separating device or a torch-cutting machine installed on parallel rails which is traveling synchronously with the strand by means of clamping or by means of a motor is arranged above this cutting roller table.
This strand-casting installation equipped with gas-control devices for the cutting torches, with edge feelers on the torch carriages and heat shields protecting against the heat radiations from the strand, characterized by
- a cutting roller table (2) consisting of shiftable or travelling individual rolls (3). These individual rolls are designed with single or multiple disc rolls and are arranged in accordance with the typical torch courses when cutting during the synchronous travel.
- a torch-cutting machine (4) equipped with levers (17) to lift and lower with its traveling rails of the torch bridge (13) and that it can produce synchronous travel with the strand (1) when sitting down on it.
- a torch cutting machine (4) having a travel drive (16) without clutch for a travel independent from the strand (1) motion. This drive does not cause any significant resistance towards the synchronous travel produced when sitting down the torch-carriage bridge.
- a torch cutting machine (4) carrying the gas control devices (12) for the cutting torches (9) on the torch carriages (10) which are connected with these control devices (12) by means of rigid piping (11). Flexible hoses arranged inside hose drag chains supply these gas control devices (12) with utilities of which the pressures are sometimes pre-adjusted.
- a torch cutting machine (4) carrying towards the torches (9) adjustable, liftable edge feelers (25) on the torch carriages (10). The edge feelers are located on top of electric contacts (29).
- a torch cutting machine (4) equipped with additional heating nozzles (33) on the cutting torches (9) which can be moved close together for better initial cutting and faster cutting.

2. Strand-casting installation for steel according to claim Nº 1. Characterized by a cutting roller table (2) with individual cutting rolls (3). These rolls are designed as shiftable or travelling rolls, single or multiple disc rolls with bearing and travelling drive.

3. Strand-casting installation for steel according to one of the claims Nº 1 and 2. Characterized by levers (17) for lifting and lowering the torch bridge (13) reaches over the entire length of the machine from the swivel bearings in the rear to the torch bridge (13) with one skid (20). These levers (17) are designed in a simple or crosswise-connected manner or as a parallelogram.

4. Strand-casting installation for steel according to one of the claims Nº 1 to 3. Characterized by an adjustable, spring member (23) for a weight-related placement of the torch bridge (13) which is installed between the lifting drive (18), consisting of motorized, pneumatic or hydraulic drive elements with pull rope or pull chain (22), and the levers (17) which can be lifted and lowered with heat shield (21).

5. Strand-casting installation for steel according to one of the claims Nº 1 to 4. Characterized by a heat shield (21) which protects most of the bottom of the torch cutting machine (4) against radiant heat coming from below. This shield (21) is fixed to the levers (17) of the torch bridge (13) and can be moved up and down together with this torch bridge (13).

6. Strand-casting installation for steel according to one of the claims Nº 1 to 5. Characterized by a feeler carrier (27) which is arranged in a rotatable manner with edge feeler (25) on a horizontal base axle (26) located at the torch carriage (10) and is held by a lifting cylinder (28) with electrical contact (29). An adjustable stop (30) secures the exact position between strand (1) edge and cutting torch (9) when the edge feeler (25) touches the strand (1) edge.

7. Strand-casting installation for steel according to one of the claims Nº 1 to 6. Characterized by a machine travel drive (16) consisting of AC- or DC-motor with brake and a very little self braking gear. Two of these gear-motor-brake-drive sets are equipped with spur gear are installed on different sides of the torch cutting machine (4).

8. Strand-casting installation for steel according to at least one of the claims Nº 1 to 7. Characterized by gas-control devices (12) for distribution, shut-off, pressure and mass flow control with gauges on the torch carriage (10) liftable and lowerable on the torch bridge (13), arranged close to the cutting torches (9). They are supplied by flexible main lines and provide the cutting torches (9) via short, solid, metallic piping (11) with utilities and coolant.

9. Strand-casting installation for steel according to one of the claims Nº 1 to 8. Characterized by a cutting torch (9) equipped with a nozzle head (31) for the normal cutting nozzle (32) and an additional heating nozzle (33) and by that the heating nozzle (33) seen in cutting direction is in front and at the side of the cutting nozzle (32) and points to the cutting line in an angle determined by the nozzle distance.

## Revendications

1. Installation de coulée continue pour l'acier avec section de séparation placée à la sortie de l'oxycoupeuse destinée à subdiviser la barre qui sort à la vitesse de coulée. Elle est équipée d'un train de rouleaux de coupage appuyant la barre sur lequel se trouve un dispositif de séparation de l'oxygène ou une oxycoupeuse sur des rails parallèles déplaçables de façon synchrone à la barre par serrage our par siège sur la barre. L'oxycoupeuse est équipée des dispositifs de la commande des fluides pour les chalumeaux d'oxycoupage, des détecteurs de bord aux chariots porte-chalumeau et de plaques de protection contre la chaleur de la brame.
L'installation est caractérisée
- en ce que le train de rouleaux (2) est constitué de rouleaux individuels (3) mobiles et déplaçables, formés de poulies simples ou de poulies multiples et disposés de façon qu'ils correspondent à la course typique du chalumeau pendant le coupage synchrone;
- en ce que l'oxycoupeuse (4) dispose des leviers (17) pour soulever et abaisser le pont du chariot porte-chalumeau (13) et peut produire la course synchrone à la barre (1) grâce au siège sur la barre;
- en ce que l'oxycoupeuse (4) dispose d'une commande de translation (16) sans embrayage pour le mouvement indépendant de la barre (1) qui n'oppose pas de résistance importante à la course synchrone causée par le siège du pont du porte-chalumeau (13);
- en ce que l'oxycoupeuse (4) porte sur les chariots porte-chalumeau (10) les unités de réglage des fluides (12) pour les brûleurs (9) et qu'elles sont raccordées avec ceux-ci par des tuyaux fixes (11); pour l'adduction des fluides préréglés parfois aux dispositifs de commande de gaz (12) on a prévu des tuyaux flexibles dans des conduites mobiles;
- en ce que l'oxycoupeuse (4) aux chariots porte-chalumeau 10) porte des détecteurs de bord (25) réglables et oscillants qui reposent sur des contacts électriques (29) vers le côté du brûleur (9);
- en ce que l'oxycoupeuse (4) porte aux brûleurs de coupe (9) des buses de chauffage (33) supplémentaires mobiles l'une par rapport à l'autre permettant une amélioration d'amorçage et une accélération de coupe.

2. Installation de coulée continue pour l'acier selon revendication 1, caractérisée en ce que la ligne de rouleaux de coupe (2) est équipée de rouleaux individuels de coupe (3) qui sont construits comme des cylindres deplaçables par roulement ou par glissement, des poulies simples ou multiples avec palier et commande de translation.

3. Installation de coulée continue selon l'une des revendications 1 ou 2, caractérisée en ce que les leviers (17) destinés à soulever et à descendre le pont du chariot porte-chalumeau (13) s'étendent sur toute la longueur de la machine sortant des paliers pivotants en arrière jusqu'à la voie du chariot (13) avec un patin (20) et qu'ils sont construits comme des leviers (17) simples ainsi que raccordés transversalement ou en parallélogramme.

4. Installation de coulée continue pour l'acier selon l'une quelconque des revendications 1 à 3, caractérisée en ce qu'entre d'une part le dispositif de levage (18) se composant des éléments commandés par moteur ou des éléments de commande hydraulique ou pneumatique avec câble ou chaîne de traction et, d'autre part, les leviers (17) munis d'une plaque antichaleur (21) servant à abaisser resp. à soulever il y a un intermédiaire (23) à ressort ajustable chargé du siège proportionnel du pont du chariot porte-chalumeau (13).

5. Installation de coulée continue pour acier selon l'une quelconque des revendications 1 à 4 caractérisée en ce qu'une plaque antichaleur (21) qui protège surtout toute la face inférieure de l'oxycoupeuse (4) contre la chaleur radiante est fixée aux leviers (17) de la voie du chariot (13) abaissable et soulevable et peut monter et descendre simultanément avec celle-ci.

6. Installation de coulée continue pour acier selon l'une quelconque des revendications 1 à 5, caractérisée en ce qu'un bras de palpeur (27) sur pivot avec détecteur de bord (25) se trouvant sur un axe horizontal (26) du chariot (10) est tenu par un cylindre de levage (28) avec contact électrique (29). Un arrêt (30) réglable assure la position exacte entre le bord de la barre (1) et le brûleur (9) au moment du contact par le détecteur de bord (25).

7. Installation de coulée continue pour acier selon l'une quelconque des revendications 1 à 6, caractérisée en ce que la commande de translation de la machine (16) consiste en moteur à courant triphasé ou à courant continu avec frein et un engrenage très peu autobloquant. Deux de ces ensembles de commande engrenage-moteur-frein équipés avec un engrenage des roues dentées droites sont installés de part et d'autre de l'oxycoupeuse (4).

8. Installation de coulée continue pour acier selon l'une quelconque des revendications 1 à 7, caractérisée en ce que les dispositifs de commande des fluides (12) destinés à la répartition, à l'arrêt, au réglage de pression et de quantité avec éléments indicateurs se trouvent sur les chariots porte-chalumeau (10) auprès des brûleurs de coupe (9) qui montent et descendent simultanément au pont du chariot (13). Ils sont alimentés par des conduites principales amovibles et approvisionnent les chalumeaux (9) en fluides et en agents réfrigérants par de courts tuyaux métalliques (11).

9. Installation de coulée continue pour acier selon l'une quelconque des revendications 1 à 8, caractérisée en ce que le brûleur de coupe (9) est équipé d'une tête (31) pour la buse normale de coupe (32) et d'une buse supplémentaire de chauffage (33); cette dernière (33) se trouve, selon la direction de coupe, à côté de la buse de coupe (32) et montre à la ligne de coupe selon l'angle déterminé par la distance des deux buses.
